Europäisches Patentamt

European Patent Office

Office européen des brevets

(19)

(11) EP 0 733 434 B1

(12) **EUROPEAN PATENT SPECIFICATION**

(45) Date of publication and mention
of the grant of the patent:
**05.07.2006 Bulletin 2006/27**

(51) Int Cl.:
***B23Q 1/54*** (2006.01)

(21) Application number: **96104537.4**

(22) Date of filing: **21.03.1996**

(54) **Tool for cutting surface of workpiece in elliptic shape**

Werkzeug zum Zerspanen einer Werkstückoberfläche in eine elliptischförmige

Outil pour tailler la surface d'une pièce en forme elliptique

(84) Designated Contracting States:
**DE FR IT**

(30) Priority: **23.03.1995 JP 8858995**

(43) Date of publication of application:
**25.09.1996 Bulletin 1996/39**

(73) Proprietor: **HONDA GIKEN KOGYO KABUSHIKI KAISHA**
**Minato-ku, Tokyo (JP)**

(72) Inventors:
 • **Miura, Seishi**
 **Wako-shi,**
 **Saitama (JP)**
 • **Matsuda, Minoru**
 **Wako-shi,**
 **Saitama (JP)**
 • **Onimaru, Masayuki**
 **Wako-shi,**
 **Saitama (JP)**
 • **Morimoto, Yasuo**
 **Wako-shi,**
 **Saitama (JP)**

(74) Representative: **Liska, Horst et al**
 **Weickmann & Weickmann**
 **Patentanwälte**
 **Kopernikusstrasse 9**
 **81679 München (DE)**

(56) References cited:
 **EP-A- 0 563 766**       **DD-A- 51 186**
 **DE-C- 904 696**       **US-A- 3 593 603**

**EP 0 733 434 B1**

**Description**

The present invention relates to a tool for cutting an inner peripheral surface or an outer peripheral surface of a workpiece in an accurate elliptic shape.

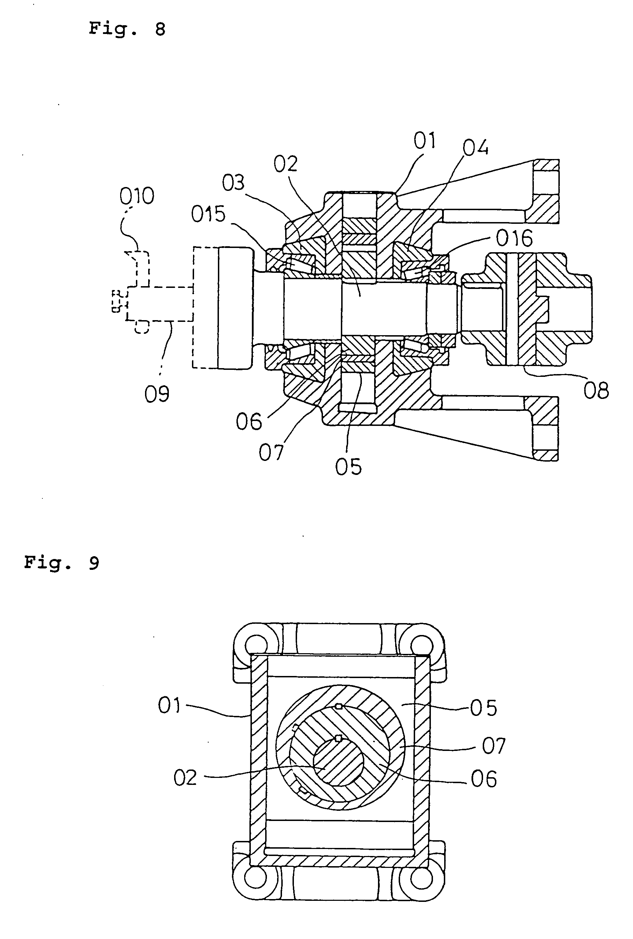

A prior art tool for cutting a surface of a workpiece in an elliptic shape has been proposed in Japanese Patent Publication No. Sho 32-7295. This tool will be described with reference to Figs. 8 and 9.

A main spindle 02 is supported on a machine frame 01 by means of transverse bearings 03, 04 respectively using tapered roller bearings 015, 016 in such a manner as to be freely reciprocated right and left (vertically to the paper in Fig. 8 being a vertical sectional side view). An eccentric guide plate 05, which is vertically movably supported on the machine frame 01, has a circular hole. An eccentric ring 06 fitted around the main spindle 02 and an eccentric ring 07 fitted around the eccentric ring 06 are turnably fitted in the circular hole of the eccentric guide plate 05 (see Fig. 9).

A rotational force is transmitted to the main spindle 02 through an Oldham's coupling 08. A holder 09 is fixedly mounted to a leading end of the main spindle 02. A cutting edge 010 is provided on the holder 09 in such a manner as to project radially from the outer surface of the holder 09.

When the main spindle 02 is rotated, the eccentric rings 06, 07 integrated with the main spindle 02 are rotated. At this time, the rotation of the eccentric rings 06, 07 is restricted by the eccentric guide plate 05 capable of being moved only in the vertical direction. The main spindle 02 provided with the cutting edge 010 is thus rotated and simultaneously controlled to be moved right and left. The cutting edge 010 depicts an elliptic locus, to cut an inner peripheral surface of a workpiece in an elliptic shape.

In the above-described prior art tool, the eccentric guide plate 05 reciprocates up and down and also the main spindle 02 reciprocates right and left, and consequently there occurs a problem that vibration is inevitably generated. This makes it difficult to achieve a high rotation of the cutting edge 010, and to obtain a high cutting accuracy.

The prior art tool has another problem due to the mechanism that the eccentric ring 07 is turnably fitted in the eccentric guide plate 05. In this mechanism, for smooth turning of the eccentric ring 07 relative to the eccentric guide plate 05, a suitable clearance must be provided between the sliding portions thereof. Such a clearance, however, causes a rattle leading to the poor cutting accuracy. In other words, either smooth turning of the eccentric ring 07 or prevention of a rattle must be sacrificed.

The previous document (Japanese Patent Publication No. Sho 32-7295) describes that eccentric dimensions can be changed by suitably selecting a fitting angle between the eccentric rings 06, 07. In this technique, however, the posture (inclination) of an elliptic shape cannot be changed.

EP 563 766-A discloses a tool for cutting a surface of a workpiece in an elliptic shape, comprising:

a gear casing,
a main spindle fixedly including a cutter radially projecting from an outer surface of the main spindle;
an input shaft rotated by a drive force supplied from the exterior;
a revolving mechanism for allowing the main spindle to revolve relative to the input shaft on the basis of the rotational force of the input shaft; and
a rotating mechanism for allowing the main spindle to rotate on its axis at the same speed as the revolving speed in the reversed direction to the revolving direction on the basis of the rotational force of the input shaft.

This prior art device comprises a revolving gear casing in which two gear shafts having a pair of toothed wheels which are rigidly mounted on the gear shafts respectively, are freely rotatably mounted. During rotation of the gear casing together with the gear shafts the lubricating oil in the gear casing accumulates in the radially outer parts of the casing due to the centrifugal force, whereby the radially inner parts of the casing, i.e. the radially inner gears are not lubricated sufficiently.

As a result, the main spindle is not allowed to rotate smoothly and accurately because the driving forces are not transferred smoothly. This effect causes a reduction in cutting accuracy and in high cutting speed of the tool.

In view of the foregoing, it is the object of the invention to provide a tool for cutting a surface of a workpiece in an elliptic shape, wherein all of the parts constituting a cutting mechanism function based on rotational motions, whereby a high cutting speed can be achieved with a high cutting accuracy being kept.

This object is achieved by a tool for cutting a surface of a workpiece in an elliptic shape, comprising: a gear casing, a main spindle fixedly including a cutter radially projecting from an outer surface of said main spindle; an input shaft rotated by a drive force supplied from the exterior; a revolving mechanism for allowing said main spindle to revolve relative to said input shaft on the basis of the rotational force of said input shaft; and a rotating mechanism for allowing said main spindle to rotate on its axis at the same speed as the revolving speed in the reversed direction to the revolving direction on the basis of the rotational force of said input shaft; wherein said gear casing is a stationary gear casing and said revolving mechanism comprises gears rotatably contained in said stationary gear casing.

According to this configuration, when the input shaft is rotated by a drive force supplied from the exterior, the

2

main spindle revolves by the revolving mechanism and further it rotates on its axis at the same speed as the revolving speed in the direction reversed to the revolving direction. The cutter fixed on the main spindle thus rotates along an elliptic locus, to cut a peripheral surface of a workpiece in an elliptic shape.

In this configuration, since all of parts constituting the cutting mechanism function based on rotational motions (not including a reciprocating motion and the like), there occurs no vibration due to an inertia of the reciprocating motion or the like. This is effective to improve a cutting accuracy, and to achieve a high cutting speed leading to a high productivity.

In contrast with the prior art gear casing of EP 563 766-A, the gear casing of the invention is stationary and does not revolve. Thus all gears in the gear casing are evenly lubricated so that the driving forces can be transferred smoothly, a high cutting speed can be achieved with a high cutting accuracy being kept.

A counter weight may be disposed on the revolving mechanism opposite to the main spindle relative to the revolving center of the main spindle. In this configuration, the counter weight can be balanced against a torsional moment of the main spindle which eccentrically revolves. As a result, the main spindle is allowed to revolve smoothly and accurately, and further the cutting speed can be also enhanced with a high cutting accuracy being kept, resulting in a high productivity.

The tool may comprise an eccentric shaft which has a center axis eccentric to the center axis of the input shaft and which rotatably supports the main spindle, wherein the eccentric shaft is rotated by the revolving mechanism. In this configuration, the main spindle is allowed to revolve by the rotation of the eccentric shaft which rotatably supports the main spindle, so that the main spindle is allowed to revolve while rotating on its axis only by one member. This is effective to lower the number of parts and to reduce the size of the tool.

A counter weight may be integrally provided on the eccentric shaft opposite to the main spindle relative to the revolving center of the main spindle. In this configuration, since the counter weight is directly provided on the eccentric shaft being a generation source of a torsional moment, it becomes possible to obtain a high balancing effect, and to reduce the number of parts.

The revolving mechanism may comprise a first pinion meshing with a gear integrated with the input shaft, and a second pinion meshing with a gear integrated with the eccentric shaft, wherein the first pinion meshes with the second pinion, thereby rotating the eccentric shaft in the direction reversed to that of the input shaft. Moreover, the rotating mechanism may comprise a planetary gear revolving together with the eccentric shaft, wherein the planetary gear meshes with a gear integrated with the input shaft and also meshes with a gear integrated with the main spindle, thereby allowing the main spindle to rotate on its axis at the same rotational speed ratio as that of the revolving mechanism in the same rotational direction as that of the input shaft. In this configuration, the eccentric shaft is rotated by the rotation of the input shaft in the reversed direction to that of the input shaft through the first and second pinions, and thereby the main spindle is allowed to revolve in the reversed direction to that of the input shaft. At the same time, the main spindle is allowed to rotate on its axis by the rotation of the input shaft through the planetary gear at the same rotational speed ratio as that of the revolving mechanism in the same direction as that of the input shaft. The cutter fixed on the main spindle is rotated along an elliptic locus by such revolution and the rotation of the main spindle, to cut a surface of a workpiece in an elliptic shape.

The revolving mechanism may comprise an idle bevel gear, wherein the idle bevel gear meshes with a bevel gear integrated with the input shaft and also meshes with a bevel gear integrated with the eccentric shaft, thereby rotating the eccentric shaft in the direction reversed to that of the input shaft. Moreover, the rotating mechanism may comprise a planetary gear revolving together with the eccentric shaft, wherein the planetary gear meshes with a gear integrated with the input shaft and also meshes with a gear integrated with the main spindle, thereby allowing the main spindle to rotate on its axis at the same rotational speed ratio as that of the revolving mechanism in the same rotational direction as that of the input shaft. In this configuration, the eccentric shaft is rotated by the rotation of the input shaft through the idle bevel gear in the reversed direction to that of the input shaft, and thereby the main spindle is allowed to revolve in the reversed direction to that of the input shaft. At the same time, the main spindle is allowed to rotate on its axis by the rotation of the input shaft through the planetary gear at the same rotational speed ratio as that of the revolving mechanism in the same direction as that of the input shaft. The cutter fixed on the main spindle is rotated along an elliptic locus by such revolution and rotation of the main spindle, to cut a surface of a workpiece in an elliptic shape.

A plurality of sets of the first pinions and the second pinions or a plurality of idle bevel gears may be equally spaced in the circumferential direction around the center axis of the input shaft. In this configuration, a rotational motion is transmitted with a good balance, and thereby a smooth cutting with a high accuracy can be kept without a deviation in axial center when a large load is applied.

The planetary gear may include a backlash eliminating mechanism. In this configuration, it becomes possible to prevent a reduction in cutting accuracy for an elliptic shape due to a backlash caused by a change in load resistance during cutting operation.

The cutter may be held on a cutter holder, and the cutter holder may be fixed on the main spindle in such a manner as to be adjustable in turning angle relative to the main spindle. In this configuration, a posture (inclination) of an elliptic shape to be formed can be simply changed by suitably selecting the turning angle of the cutter holder relative to the main spindle when the cutter holder is fixed to the main spindle.

The casing may contain both the revolving mechanism and the rotating mechanism except for a cutter holding portion of the main spindle and an external force transmission portion of the input shaft. In this configuration, the tool can be unified into a small size, so that it can be fixed to a drive source at a specified position, resulting in the increased usability.

Brief Description of the Drawings

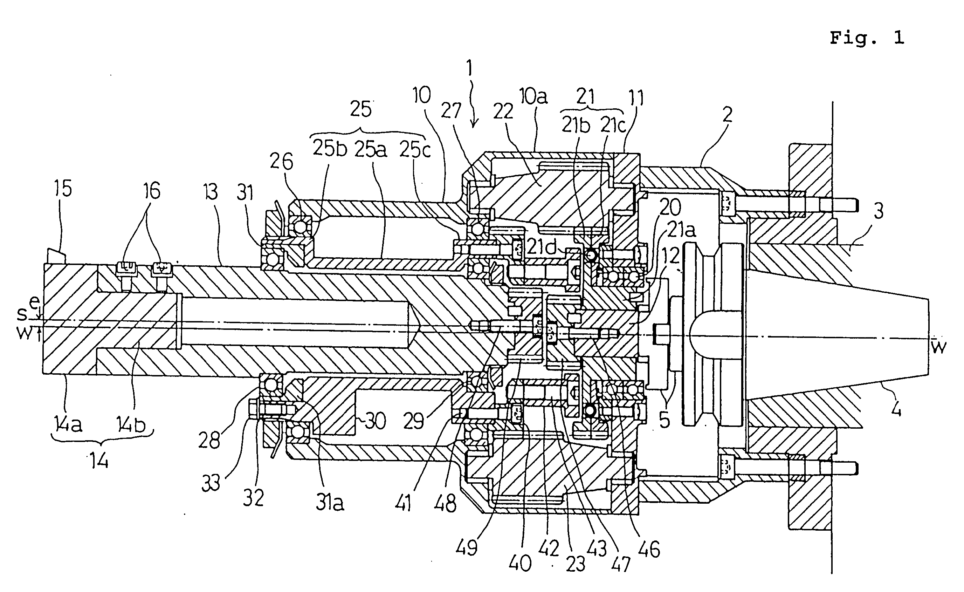

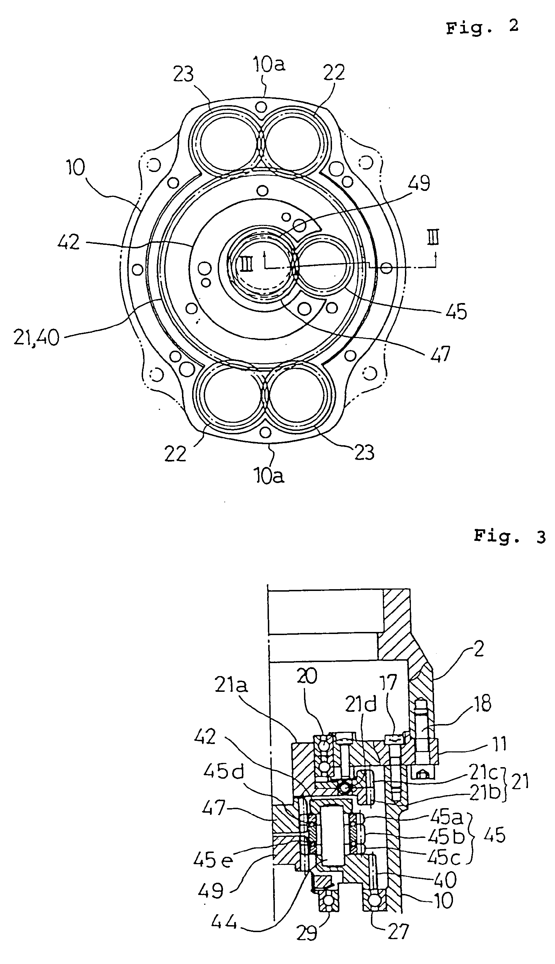

Fig. 1
is a vertical sectional side view of an embodiment of a tool for cutting a surface of a workpiece in an elliptic shape according to the present invention, which is attached to a machine frame through an attachment.
Fig. 2
is a vertical sectional front view of the tool shown in Fig. 1.
Fig. 3
is a sectional view taken on line III-III of Fig. 2.
Fig. 4
is a vertical sectional front view of the tool shown in Fig. 1 showing another state.
Figs. 5(1) to 5(8)
are schematic views illustrating motions of a cutter in sequence.
Fig. 6
is a schematic view illustrating a state that a cutting edge of the cutter depicts an elliptic locus.
Fig. 7
is a vertical sectional side view of another embodiment of the tool for cutting a surface of a workpiece in an elliptic shape according to the present invention.
Fig. 8
is a vertical sectional side view of a prior art tool for cutting a surface of a workpiece in an elliptic shape.
Fig. 9
is a vertical sectional front view of the tool shown in Fig. 8.

Hereinafter, one embodiment of the present invention will be described with reference to Figs. 1 to 6.
Fig. 1 is a vertical sectional side view of a tool 1 for cutting a surface of a workpiece in an elliptic shape which carries out the present invention, and an attachment 2. The tool 1 is fixed on a cutting machine through the attachment 2. A drive force is transmitted from a tool holder 4 mounted on a drive shaft 3 of the cutting machine to a drive shaft 12 as an input shaft of the tool 1 through an Oldham's coupling 5.
Almost all members constituting the tool 1 are contained in an approximately cylindrical casing 10. An input side opening of the casing 10 is covered with a cover member 11. The drive shaft 12 is rotatably fitted in a central portion of the cover member 11.
A main spindle 13 projects from the output side of the casing 10 in such a manner as to be eccentric and in parallel to the drive shaft 12. A cutter holder 14 is mounted on the leading end of the main spindle 13. A cutter 15 is provided on the cutter holder 14 in such a manner as to project radially from the outer peripheral surface of the cutter holder 14.
The main spindle 13 is formed in a cylindrical shape except for the base end portion thereof. The cutter holder 14 includes a large diameter column portion 14a and a small diameter column portion 14b. The large diameter column portion 14a has an outside diameter nearly equal to that of the main spindle 13, and the small diameter column portion 14b has an outside diameter nearly equal to an inside diameter of the cylindrical portion of the main spindle 13. The small diameter column portion 14b of the cutter holder 14 is inserted in the cylindrical portion of the main spindle 13. Then, fixing screws 16 are screwed in two holes formed in a side wall, near the leading end, of the main spindle 13 to the degree that the leading ends of the fixing screws 16 are pressed onto the small diameter column portion 14b of the cutter holder 14. The cutter holder 14 is thus fixed to the main spindle 13.
The cutter 15 is provided on the cutter holder 14 in such a manner as to vertically project from the outer peripheral surface of the large diameter column portion 14a of the cutter holder 14.
The orientation of the cutter 15 relative to the main spindle 13 can be changed by loosening the fixing screws 16 and turning the cutter holder 14 relative to the spindle shaft 13. This allows the posture (inclination) of an elliptic shape to be changed, as described fully later.
A center axis S of the main spindle 13 is, as shown in Fig. 1, eccentric relative to a workpiece center axis W, that is, a rotating center axis of the drive shaft 12 by an eccentric amount "e".

The internal structure of the casing 10 will be described below.

As shown in Fig. 3, the cover member 11 is fixed on the opening portion of the casing 10 by means of bolts 17, and the attachment 2 is screwed with a peripheral edge portion of the cover member 11 by means of bolts 18.

A cylindrical hub 21a of an eccentric shaft drive gear 21 is fitted in a central opening portion of the cover member 11 through a bearing 20. The drive shaft 12 is fixedly fitted in the hub 21a of the eccentric shaft drive gear 21.

The eccentric shaft drive gear 21 has a gear portion 21b which extends from the hub 21a while being expanded in diameter along the inner surface of the cover member 11. A gear portion 21c, which is rotatable relative to the gear portion 21b, is slidably brought in contact with the back surface of the gear portion 21b. A spring 21d is interposed in the circumferential direction between both the gear portions 21b and 21c, to form a backlash eliminating mechanism.

The casing 10 is outward expanded, to form an expanded portion 10a. Two spaces, which are vertically symmetric relative to the eccentric shaft drive gear 21, are formed in the expanded portion 10a. One set of a first pinion 22 and a second pinion 23 meshing with each other are rotatably contained in each of the two spaces of the expanded portion 10a in such a manner that the rotational center axes thereof are oriented in parallel to the workpiece center axis W. The first pinion 22 is identical in diameter and number of teeth to the second pinion 23.

The first pinions 22, 22 positioned in the upper and lower spaces mesh with the eccentric shaft drive gear 21.

An approximately cylindrical shaped eccentric shaft 25 are rotatably supported at its front and rear portions by the cylindrical portion, on the main spindle 13 side, of the casing 10 through bearings 26, 27, respectively. The half portion, on the base end side, of the main spindle 13 is inserted in the eccentric shaft 25, and is rotatably supported by the eccentric shaft 25 through front and rear bearings 28, 29.

The eccentric shaft 25 includes an intermediate cylindrical portion 25a, and expanded diameter portions 25b, 25c. The expanded diameter portions 25b, 25c, which are expanded in the radial direction, are formed to be continuous to both the ends of the intermediate cylindrical portion 25a. Bearings 26, 27 are interposed between the outer peripheral surfaces of the expanded diameter portions 25b, 25c and the inner peripheral surface of the casing 10, respectively. The eccentric shaft 25 rotates around the workpiece center axis W, but an internal columnar space of the eccentric shaft 25 is eccentric to the workpiece center axis W by the eccentric amount "e". Accordingly, the main spindle center axis S being the rotating center of the main spindle 13 inserted in such a columnar space is also eccentric to the workpiece center axis W by the eccentric amount "e".

The eccentric shaft 25 has a counter weight 30 for the spindle shaft 13. Specifically, the outer periphery of the intermediate cylindrical portion 25a is partially swelled in such a manner as to be continuous to the expanded diameter portion 25b and to project opposite to the spindle center axis S relative to the workpiece center axis W. Such a swelled portion forms the counter weight 30.

When the eccentric shaft 25 is rotated, the counter weight 30 is balanced against the main spindle 13 inserted in the eccentric columnar space of the eccentric shaft 25, thus allowing for a smooth rotation without any torsional moment.

The main spindle 13 is, as described above, rotatably supported on the eccentric shaft 25 through the bearings 28, 29 respectively interposed between the inner peripheral surfaces of the expanded diameter portions 25b, 25c and the main spindle 13. In this arrangement, an offset collar 31 is held between the bearing 28 from which the main spindle 13 projects outward and the expanded diameter portion 25b of the eccentric shaft 25.

With respect to the offset collar 31 formed in an annular shape, the inner peripheral circle is eccentric to the outer peripheral circle. The eccentric amount of the main spindle 13 can be finely adjusted by turning the offset collar 31 relative to the eccentric shaft 25.

An annular portion, held between the expanded diameter portion 25b and the bearing 28, of the offset collar 31 axially extends, to form a base portion 31a. The base portion 31a is small in inside diameter and large in thickness. The base portion 31a is brought in contact with a stepped portion of the expanded diameter portion 25b, and the offset collar 31 is fixedly held between the stepped portion of the expanded diameter portion 25b and the bearing 28 by means of a fixing bolt 33 screwed in the end surface of the expanded diameter portion 25b through a washer 32.

The main spindle 13, which is thus eccentrically and rotatably supported on the eccentric shaft 25, is allowed to revolve around the workpiece center axis W by rotation of the eccentric shaft 25 and is also allowed to rotate on the main spindle center axis S.

An eccentric shaft driven gear 40 is fixed on the end portion, positioned in the casing 10, of the eccentric shaft 25 by means of bolts 41. The eccentric shaft driven gear 40, which is identical in diameter and number of teeth to the eccentric shaft drive gear 21, meshes with the second pinions 23.

When the drive shaft 12 is rotated together with the eccentric shaft drive gear 21, the eccentric shaft 25 is rotated together with the eccentric shaft driven gear 40 through the first and second pinions 22, 23. This constitutes a revolving mechanism for the main spindle 13.

With this revolving mechanism, the eccentric shaft 25 is rotated at the same angular speed as that of the drive shaft 12 in the rotational direction reversed to that of the drive shaft 12.

An annular supporting member 42 is fixed on one side of the eccentric shaft driven gear 40. As shown in Fig. 3, a supporting shaft 44 is supported on the eccentric shaft driven gear 40 and the annular supporting member 42, and a planetary gear 45 is rotatably supported on the supporting shaft 44.

Accordingly, the planetary gear 45 is rotated around the workpiece center axis W together with the eccentric shaft 25 through the eccentric shaft driven gear 40.

A main spindle drive gear 47 is coaxially fixed on the end portion of the drive shaft 12 by means of a bolt 46. On the other hand, a main spindle driven gear 49 is coaxially fixed on the end portion of the main spindle 13 by means of a bolt 48. The main spindle drive gear 47 and the main spindle driven gear 49 are identical to each other in diameter and number of teeth, and they are eccentrically opposite to each other with a slight gap kept therebetween.

The rotating planetary gear 45 meshes with the main spindle drive gear 47 and the main spindle driven gear 49.

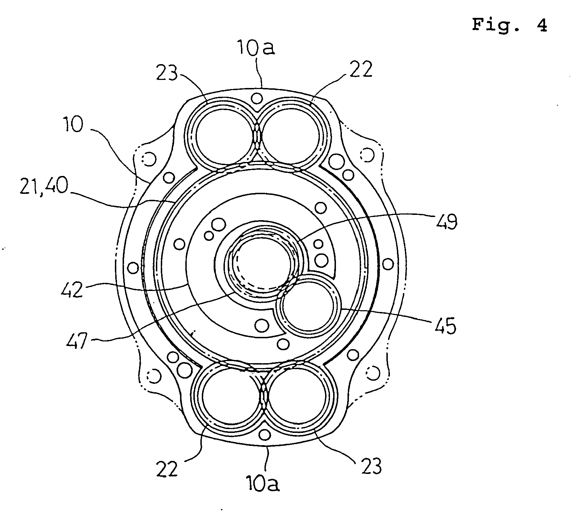

Referring to Figs. 2 and 4, the planetary gear 45 rotated together with the eccentric shaft 25 meshes with the main spindle driven gear 49 coaxial with the main spindle 13 supported by the eccentric shaft 25 while usually keeping the same positional relationship therebetween. On the other hand, the planetary gear 45 meshes with the main spindle drive gear 47 coaxial with the drive shaft 12 in such a manner that it rotates around the spindle drive gear 47 at a specified speed.

The rotation of the drive shaft 12 is thus transmitted to the main spindle 13 through the meshing between the main spindle gear 47, planetary gear 45 and main spindle driven gear 49. This constitutes a rotating mechanism for the main spindle 13.

With this rotating mechanism, the main spindle 13 is allowed to rotate on its axis at the same angular speed as that of the drive shaft 12 in the same rotational direction as that of the drive shaft 12.

Such a rotation transmitting mechanism using the planetary gear 45 may be replaced with a uniform motion coupling mechanism.

As shown in Fig. 3, the planetary gear 45 is divided in the axial direction into three gear parts 45a, 45b and 45c. The center gear part 45b meshes with the main spindle drive gear 47 and the main spindle driven gear 49, and the end gear parts 45a, 45c mesh only with the main spindle drive gear 47 and the main spindle driven gear 49, respectively. Each of springs 45d, 45e is interposed in the circumferential direction between the adjacent gear parts, to form a backlash eliminating mechanism.

The tool 1 in this embodiment having the above-described configuration is fixed on a machine through the attachment 2. The drive shaft 12 is rotated by driving of the main spindle of the machine through the Oldham's coupling 5. At this time, a rotational force of the drive shaft 12 is divided into two rotational components. One rotational component is transmitted from the eccentric shaft drive gear 21 to the eccentric shaft 25 through the first and second pinions 22, 23 and eccentric shaft driven gear 40. The main spindle 13 is thus allowed to revolve by the rotation of the eccentric shaft 25. The other rotational component is transmitted from the main spindle drive gear 47 to the main spindle 13 through the planetary gear 45 and main spindle driven gear 49. The main spindle 13 is thus allowed to rotate on its axis.

The main spindle 13 is allowed to revolve at the same angular speed as that of the drive shaft 12 in the rotational direction reversed to that of the drive shaft 12. On the other hand, the main spindle 13 is allowed to rotate on its axis at the same angular speed as that of the drive shaft 12 in the same rotational direction as that of the drive shaft 12.

As a result, the cutter 15 rotating together with the main spindle 13 is allowed to revolve around the workpiece center axis S. At the same time, the cutter 15 is also allowed to rotate on the spindle center axis S at the same rotating angular speed as the revolving angular speed in the same rotating direction as the revolving direction.

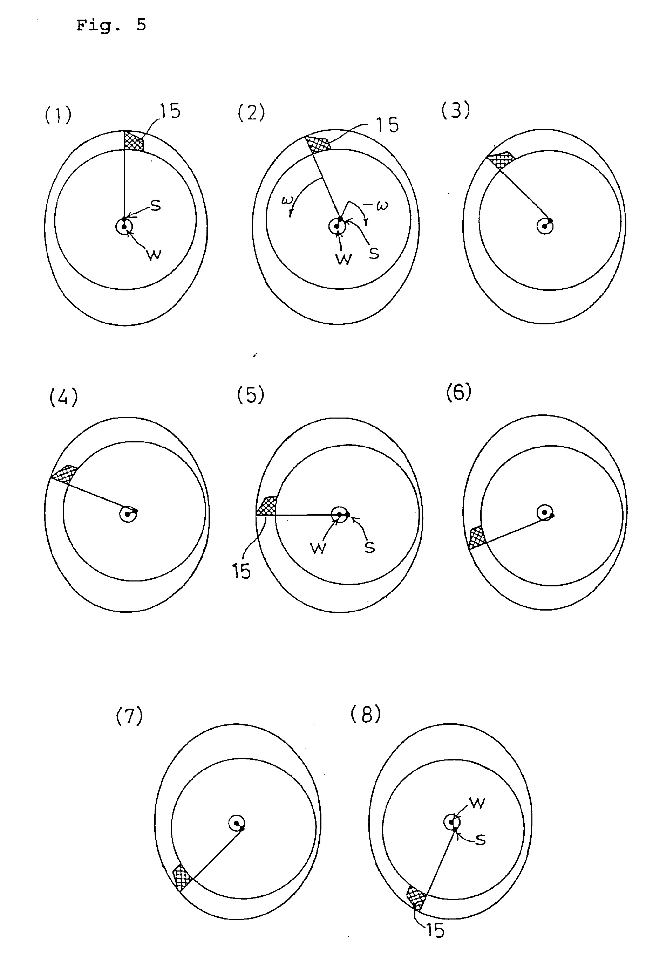

Figs. 5(1) to 5(8) sequentially show the movement of the cutter 15, particularly, the locus of the cutting edge of the cutter 15.

In these figures, the spindle center axis S revolves clockwise around the workpiece center axis W at an angular speed ω by revolution of the main spindle 13, and the cutter 15 rotates counterclockwise on the spindle center axis S at the same angular speed w.

Fig. 5(1) shows a state that the spindle center axis S and the cutter 15 are linearly aligned in the same direction relative to the workpiece center axis W. In this state, the cutting edge of the cutter 15 lies at a point on the major axis of the ellipse.

When the cutter 15 is further turned by 90° from such a state by revolution and rotation, the spindle center axis S and the cutter 15 are aligned linearly in the reversed direction relative to the work piece center W, as shown in Fig. 5 (5). In this state, the cutting edge of the cutter 15 lies at a point on the minor axis of the ellipse.

The linear arrangement of the spindle center axis S and the cutter 15 are alternately changed between the states being aligned in the same direction and the reversed direction relative to the workpiece center axis W, for each turning by 90°. And, the cutting edge of the cutter 15 alternately passes the points on the major axis and the minor axis of the ellipse, to form an elliptic shape.

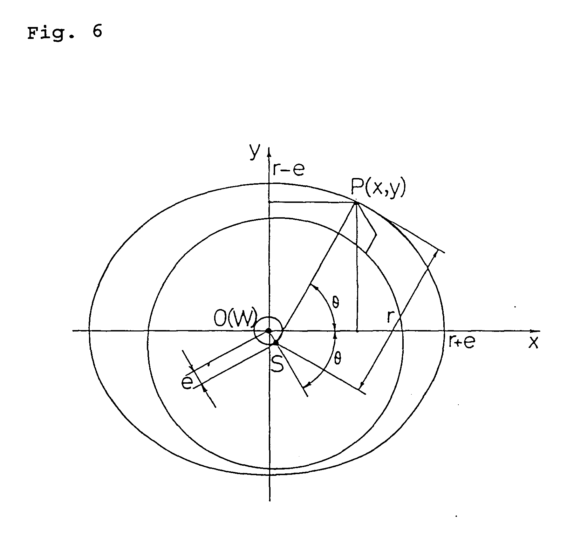

Fig. 6 is a view for illustrating the fact that the cutting edge of the cutter 15 really depicts an elliptic shape. Assuming x and y coordinates with the workpiece center axis W taken as an original point as shown in Fig. 6, a cutting edge P(x, y) of the cutter 15 will depicts the following locus.

Fig. 6 shows a state after an elapse of a time "t" since the spindle center axis S and the cutter 15 are linearly aligned in the same direction (the positive direction of the X-axis) relative to the workpiece center axis W. In this state, the spindle center axis S lies at a position where it revolves clockwise by an angle wt ($\theta$), and the cutting edge P of the cutter 15 lies at a position where it rotates counterclockwise on the spindle center axis S by an angle $\omega t$ ($\theta$).

The coordinates of the spindle center axis S is given by

$$S = (e \cos \theta, -e \sin \theta)$$

where "e" is an eccentric amount of the spindle center axis S relative to the workpiece center axis W.

Letting "r" being a distance between the spindle center axis S and a cutting edge P of the cutter 15, the coordinates of the cutting edge P of the cutter 15 is given as follows:

$$x = r \cos \theta + e \cos \theta = (r + e) \cos \theta$$

$$y = r \sin \theta - e \sin \theta = (r - e) \sin \theta$$

By deleting $\theta$ from the above two equations, the following equation is given.

$$x^2/(r + e)^2 + y^2/(r - e)^2 = 1$$

This equation exhibits that the locus of the cutting edge P (x, y) of the cutter 15 depicts an elliptic shape.

Since the tool 1 forms an elliptic shape on the basis of rotational motions as described above, no vibration due to a reciprocating motion is generated. As a result, it becomes possible to improve the cutting accuracy, and to increase the cutting speed resulting in a high productivity.

In this tool 1, the counter weight 30 is integrally formed on the eccentric shaft 25 supporting the eccentric spindle shaft 13 at a position opposite to the spindle shaft 13. As a result, the counter weight 30 is balanced against the torsional moment of the eccentrically revolving spindle shaft 13. This is effective to make smooth and accurate the revolution of the spindle shaft 13.

Two sets of the first and second pinions 22, 23 for rotating the eccentric shaft 25 are symmetrically disposed in the vertical direction, so that a rotational force is transmitted with a good balance. This is effective to keep a high cutting accuracy without a deviation in axial center when a large load is applied.

When the cutter 15 cuts a workpiece in an elliptic shape, a cutting angle (angle of attack) of the cutting edge of the cutter 15 is not constant as in the case of cutting the workpiece in a true circle (see Fig. 5). As a result, a load resistance is periodically changed during cutting operation, and it directly exerts an effect on the rotational speed. This disturbs a specified relationship between rotation and revolution, tending to reduce the accuracy of the elliptic shape. In this embodiment, however, the planetary gear 45 for allowing the rotation of the cutter 15 includes a backlash eliminating mechanism, to suppress a backlash due to a change in load resistance, thereby preventing a reduction in the cutting accuracy for an elliptic shape to be formed.

The tool 1 in this embodiment, which is compactly unified in the casing 10, can be simply attached to various drive sources through the attachment 2. Accordingly, the tool 1 is excellent in usability.

In this tool 1, spur gears and common bearings are used, and thereby the manufacturing cost can be reduced.

The cutter 15 in this embodiment projects from the cutter holder 14, and the cutter holder 14 is mounted on the spindle shaft 13 in such a manner as to be adjustable in the turning angle.

The cutter holder 14 can be turned relative to the spindle shaft 13 by loosening the fixing bolts 16, and thereby the turning angle of the cutter 15 relative to the spindle shaft 13 can be easily adjusted.

The posture (inclination) of the ellipse can be changed by varying the angle of the cutter 15 relative to the spindle shaft 13. Specifically, the direction of the major axis of an ellipse where the spindle center axis S and the cutter 15 are linearly aligned in the same direction relative to the workpiece center axis W and the direction of the minor axis of the ellipse where they are linearly aligned in the reversed direction relative to the workpiece center axis W (see Fig. 5) can be changed.

For example, when the cutter holder 14 is turned by a turning angle $\alpha$ relative to the spindle shaft 13, an ellipse to be formed can be changed in its posture (inclination) by an angle $\alpha$ /2. The posture of the ellipse can be thus simply and accurately adjusted.

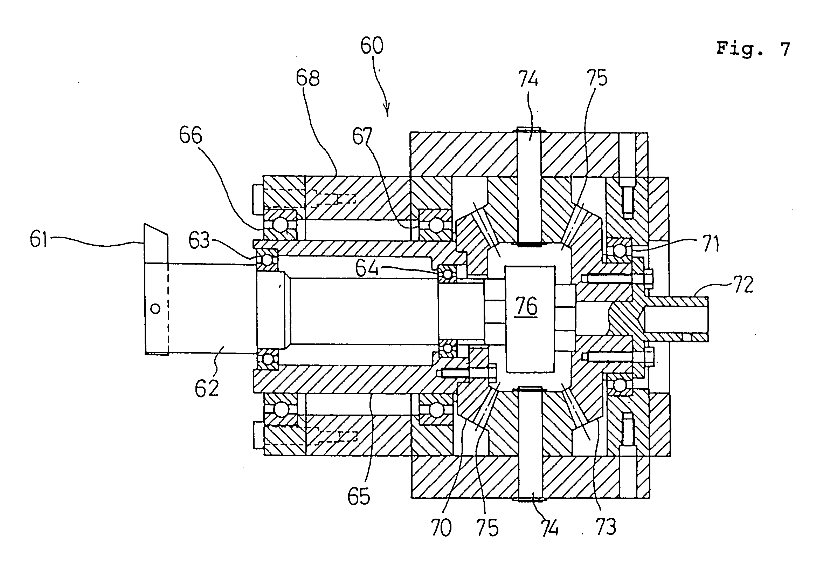

Another embodiment of the present invention will be described with reference to Fig. 7.

A tool 60 for cutting a surface of a workpiece in an elliptic shape in this embodiment is basically similar to that in the previous embodiment except for the rotation transmitting mechanism. A main spindle 62 mounting a cutter 61 is rotatably supported in an eccentric shaft 65 through bearings 63, 64. The eccentric shaft 65 is rotatably supported in a casing 68 through bearings 66, 67.

An eccentric shaft driven bevel gear 70 is fitted on the eccentric shaft 65. On the other hand, an eccentric shaft drive bevel gear 73 is fitted on a drive shaft 72 rotatably supported in the casing 68 through a bearing 71. The eccentric shaft drive bevel gear 73 faces to the eccentric shaft driven bevel gear 70 with a suitable interval kept therebetween. Both the bevel gears 73, 70 mesh with vertically symmetric idle bevel gears 75, 75 rotatably supported on supporting shafts 74, 74. A rotation of the drive shaft 72 is thus transmitted to the eccentric shaft 65.

The eccentric shaft drive bevel gear 73 is identical in diameter and number of teeth to the eccentric shaft drive bevel gear 70. The eccentric shaft 65 is rotated at the same angular speed as that of the drive shaft 72 in the rotational direction reversed to that of the drive shaft 72.

The main spindle 62 is allowed to revolve by the rotation of the eccentric shaft 65.

The drive shaft 72 is connected to the eccentric main spindle 62 through a Schmitt coupling 76, and thereby the main spindle 62 is allowed to rotate on its axis at the same angular speed as that of the drive shaft 72 in the same rotational direction as that of the drive shaft 72.

The Schmitt coupling may be replaced with a uniform motion coupling or it can be replaced with an Oldham's coupling in accordance with an accuracy and a speed required for cutting. Alternatively, the planetary gear used in the previous embodiment may be interposed.

The cutter 61 thus cuts a surface of a workpiece in an elliptic shape by revolution and rotation of the main spindle 62. In this embodiment, the rotation transmitting mechanism including the bevel gears is used for allowing the main spindle 62 having the cutter 61 to revolve, so that the number of parts can be reduced

In the previous embodiments, the cutter projects in the centrifugal direction from the outer surface of the main spindle for cutting an inner peripheral surface of a workpiece in an elliptic shape; however, it may project in the horizontal direction from the end surface of the main spindle for cutting an outer peripheral surface of a workpiece in an elliptic shape.

Summarized the present invention seeks to provide a tool for cutting a surface of a workpiece in an elliptic shape, wherein all of parts constituting a cutting mechanism function based on rotational motions, whereby a high cutting speed can be achieved with a high cutting accuracy being kept, resulting in a high productivity.

A tool for cutting a surface of a workpiece in an elliptic shape includes a main spindle 13 fixedly including a cutter 15 radially projecting from an outer surface of the main spindle 13; an input shaft 12 rotated by a drive force supplied from the exterior; a revolving mechanism for allowing the main spindle 13 to revolve relative to the input shaft 12 on the basis of the rotational force of the input shaft 12; and a rotating mechanism for allowing the main spindle 13 to rotate on its axis at the same speed as the revolving speed in the reversed direction to the revolving direction on the basis of the rotational force of the input shaft 12.

**Claims**

1. A tool for cutting a surface of a workpiece in an elliptic shape, comprising: a gear casing (10,10a;68)

   a main spindle (13;62) fixedly including a cutter (15;61) radially projecting from an outer surface of said main spindle (13;62);
   an input shaft (12;72) rotated by a drive force supplied from the exterior;
   a revolving mechanism (21,22,23,25,40;65,70,73,74,75) for allowing said main spindle (13;62) to revolve relative to said input shaft (12;72) on the basis of the rotational force of said input shaft (12;72); and
   a rotating mechanism (45,47,49;76) for allowing said main spindle (13;62) to rotate on its axis at the same speed as the revolving speed in the reversed direction to the revolving direction on the basis of the rotational force of said input shaft (12;72);

   **characterized in that** said gear casing (10, 10a; 68) is a stationary gear casing (10, 10a; 68) and said revolving mechanism (21, 22, 23, 25, 40; 65, 70, 73, 74, 75) comprises gears (22, 23; 75) rotatably contained in said stationary gear casing (10, 10a; 68).

2. A tool according to claim 1, wherein a counter weight is disposed on said revolving mechanism opposite to said main spindle relative to the revolving center of said main spindle.

**3.** A tool according to claim 1, further comprising an eccentric shaft (25;65) which has a center axis (w) eccentric to the center axis (5) of said input shaft (12;72) and which rotatably supports said main spindle (13;62), wherein said eccentric shaft is rotated by said revolving mechanism (21,22,23,25,40;65,70,73,74,75).

**4.** A tool according to claim 3, wherein a counter weight (30) is integrally provided on said eccentric shaft (25) opposite to said main spindle (13) relative to the revolving center of said main spindle (13).

**5.** A tool according to claim 3 or 4, wherein said revolving mechanism (21,22,23,25,40;65,70,73,74,75) comprises a first pinion (22) meshing with a gear (21) integrated with said input shaft (12), and a second pinion (23) meshing with a gear (40) integrated with said eccentric shaft (25) wherein said first pinion (22), meshes with said second pinion (23), thereby rotating said eccentric shaft (25) in the direction reversed to that of said input shaft (12); and said rotating mechanism (45,47,49;76) comprises a planetary gear (45) revolving together with said eccentric shaft (25), wherein said planetary gear (45) meshes with a gear (47) integrated with said input shaft (12) and also meshes with a gear (49) integrated with said main spindle (13), thereby allowing said main spindle (13) to rotate on its axis (5) at the same rotational speed ratio as that of said revolving mechanism in the same rotational direction as that of said input shaft (12).

**6.** A tool according to claim 3 or 4, wherein said revolving mechanism comprises an idle bevel gear (75), wherein said idle bevel gear (75) meshes with a bevel gear (73) integrated with said input shaft (72) and also meshes with a bevel gear (70) integrated with said eccentric shaft (65), thereby rotating said eccentric shaft (65) in the direction reversed to that of said input shaft (72); and
said rotating mechanism comprises a planetary gear (45) revolving together with said eccentric shaft (25), wherein said planetary gear (45) meshes with a gear integrated with said input shaft (12) and also meshes with a gear integrated with said main spindle (13), thereby allowing said main spindle (13) to rotate on its axis at the same rotational speed ratio as that of said revolving mechanism in the same rotational direction as that of said input shaft (12).

**7.** A tool according to claim 5 or 6, wherein a plurality of sets of said first pinions (22) and said second pinions (23) or a plurality of idle bevel gears are equally spaced in the circumferential direction around the center axis of said input shaft.

**8.** A tool according to claim 5 or 6, wherein said planetary gear (45) includes a backlash eliminating mechanism.

**9.** A tool according to any of claims 1 to 8, wherein said cutter (15;61) is held on a cutter holder (14), and said cutter holder (14) is fixed on said main spindle (13;62) in such a manner as to be adjustable in turning angle relative to said main spindle (13,62).

**10.** A tool according to any of claims 1 to 9 , wherein said casing (10,10a;68) contains both said revolving mechanism (21,22,23,25,40;65,70,73,74,75) and said rotating mechanism (45,47,49;76) except for a cutter holding portion (14) of said main spindle (13) and an external force transmission portion of said input shaft (12;72).

**Patentansprüche**

**1.** Werkzeug zum Schneiden einer Oberfläche eines Werkstücks in einer elliptischen Form, umfassend:

ein Getriebegehäuse (10, 10a; 68);
eine Hauptspindel (13; 62), die fest einen Meißel (15; 61) enthält, der radial von einer Außenoberfläche der Hauptspindel (13; 62) vorsteht;
eine Eingangswelle (12; 72), die durch eine von außen zugeführte Antriebskraft gedreht wird;
einen Umlaufmechanismus (21, 22, 23, 25, 40; 65, 70, 73, 74, 75), um zu erlauben, dass die Hauptspindel, (13; 62) relativ zur Eingangswelle (12; 72) auf der Basis der Drehkraft der Eingangswelle (12; 72) umläuft; und
einen Drehmechanismus (45, 47, 49; 76), um zu erlauben, dass sich die Hauptspindel (13; 62) auf ihrer Achse mit der gleichen Geschwindigkeit wie der Umlaufgeschwindigkeit in der zur Umlaufrichtung entgegengesetzten Richtung auf der Basis der Drehkraft der Eingangswelle (12; 72) dreht;

**dadurch gekennzeichnet, dass** das Getriebegehäuse (10, 10a; 68) ein stationäres Getriebegehäuse (10, 10a; 68) ist und der Umlaufmechanismus (21, 22, 23, 25, 40; 65, 70, 73, 74, 75) Zahnräder (22, 23; 75) aufweist, die in dem stationären Getriebegehäuse (10, 10a; 68) drehbar aufgenommen sind.

2. Werkzeug nach Anspruch 1, worin ein Gegengewicht an dem Umlaufmechanismus, relativ zur Umlaufmitte der Hauptspindel entgegengesetzt zur Hauptspindel, angeordnet ist.

3. Werkzeug nach Ansrpuch 1, das ferner eine Exzenterwelle (25; 65) aufweist, die eine Mittelachse (W) aufweist, die zur Mittelachse (S) der Eingangswelle (12; 72) exzentrisch ist und die die Hauptspindel (13; 62) drehbar trägt, worin die Exzenterwelle durch den Umlaufmechanismus (21, 22, 23, 25, 40; 65, 70, 73, 74, 75) gedreht wird.

4. Werkzeug nach Anspruch 3, worin ein Gegengewicht (30) integral an der Exzenterwelle (25), relativ zur Umlaufmitte der Hauptspindel (13) entgegengesetzt zur Hauptspindel (13), vorgesehen ist.

5. Werkzeug nach Anspruch 3 oder 4, worin der Umlaufmechanismus (21, 22, 23, 25, 40; 65, 70, 73, 74, 75) ein erstes Ritzel (22), das mit einer an der Eingangswelle (12) integrierten Verzahnung (21) in Eingriff steht, sowie ein zweites Ritzel (23), das mit einer mit der Exzenterwelle (25) integrierten Verzahnung (40) in Eingriff steht, aufweist, worin das erste Ritzel (22) mit dem zweiten Ritzel (23) in Eingriff steht, um hierdurch die Exzenterwelle (25) in der zur Eingangswelle (12) entgegengesetzten Richtung zu drehen; und
der Drehmechanismus (45, 47, 49; 76) ein Planetenzahnrad (45) aufweist, das zusammen mit der Exzenterwelle (25) umläuft, worin das Planetenzahnrad (45) mit einer mit der Eingangswelle (12) integrierten Verzahnung (47) in Eingriff steht und auch mit einer mit der Hauptspindel (13) integrierten Verzahnung (49) in Eingriff steht, um hierdurch zu erlauben, dass sich die Hauptspindel (13) auf ihrer Achse (S) mit dem gleichen Drehzahlverhältnis wie jenem des Umlaufmechanismus in der gleichen Richtung wie jener der Eingangswelle (12) dreht.

6. Werkzeug nach Anspruch 3 oder 4, worin der Umlaufmechanismus ein Zwischenkegelrad (75) aufweist, worin das Zwischenkegelrad (75) mit einem mit der Eingangswelle (72) integrierten Kegelrad (73) in Eingriff steht und auch mit einem mit der Exzenterwelle (65) integrierten Kegelrad (70) in Eingriff steht, um hierdurch die Exzenterwelle (65) in der Richtung, die zu jener der Eingangswelle (72) entgegengesetzt ist, zu drehen; und
der Drehmechanismus ein Planetenzahnrad (45) aufweist, das zusammen mit der Exzenterwelle (25) umläuft, worin das Planetenzahnrad (45) mit einer mit der Eingangswelle (12) integrierten Verzahnung in Eingriff steht und auch mit einer mit der Hauptspindel (13) integrierten Verzahnung in Eingriff steht, um hierdurch zu erlauben, dass sich die Hauptspindel (13) auf ihrer Achse mit dem gleichen Drehzahlverhältnis wie jenem des Umlaufmechanismus in der gleichen Richtung wie jener der Eingangswelle (12) dreht.

7. Werkzeug nach Anspruch 5 oder 6, worin eine Mehrzahl von Sätzen der ersten Ritzel (22) und der zweiten Ritzel (23) oder eine Mehrzahl von Zwischenkegelrädern mit gleichem Abstand in der Umfangsrichtung um die Mittelachse der Eingangswelle herum angeordnet sind.

8. Werkzeug nach Anspruch 5 oder 6, worin das Planetenzahnrad (45) einen Spielbeseitigungsmechanismus enthält.

9. Werkzeug nach einem der Ansprüche 1 bis 8, worin der Meißel (15; 61) an einem Meißelhalter (14) gehalten ist und der Meißelhalter (14) an der Hauptspindel (13; 62) derart befestigt ist, dass sein Drehwinkel relativ zur Hauptspindel (13; 62) einstellbar ist.

10. Werkzeug nach einem der Ansprüche 1 bis 9, worin das Gehäuse (10, 10a; 68) sowohl den Umlaufmechanismus (21, 22, 23, 25, 40; 65, 70, 73, 74, 75) als auch den Drehmechanismus (45, 47, 49; 76) aufnimmt, außer einen Meißelhalteabschnitt (14) der Hauptspindel (13) und einen Außenkraftübertragungsabschnitt der Eingangswelle (12; 72).

**Revendications**

1. Outil pour découper une surface d'une pièce à usiner selon une forme elliptique, comportant :

un carter d'engrenages (10, 10a ; 68)
une broche principale (13 ; 62) incluant de manière fixe un outil de coupe (15 ; 61) faisant saillie radialement à partir d'une surface extérieure de ladite broche principale (13 ; 62),
un arbre d'entrée (12 ; 72) mis en rotation par une force d'entraînement fournie à partir de l'extérieur,
un mécanisme de pivotement (21, 22, 23, 25, 40 ; 65, 70, 73, 74, 75) pour permettre à ladite broche principale (13 ; 62) de pivoter par rapport audit arbre d'entrée (12 ; 72) sur la base de la force de rotation dudit arbre d'entrée (12 ; 72), et

un mécanisme de mise en rotation (45, 47, 49 ; 76) pour permettre à ladite broche principale (13 ; 62) de tourner sur son axe à la même vitesse que la vitesse de pivotement dans la direction inverse à la direction de pivotement sur la base de la force de rotation dudit arbre d'entrée (12 ; 72),

**caractérisé en ce que** ledit carter d'engrenages (10, 10a ; 68) est un carter d'engrenages fixe (10, 10a ; 68) et ledit mécanisme de pivotement (21, 22, 23, 25, 40 ; 65, 70, 73, 74, 75) comporte des pignons (22, 23 ; 75) contenus de manière rotative dans ledit carter d'engrenages fixe (10, 10a ; 68).

2. Outil selon la revendication 1, dans lequel un contrepoids est disposé sur ledit mécanisme de pivotement à l'opposé de ladite broche principale par rapport à l'axe de pivotement de ladite broche principale.

3. Outil selon la revendication 1, comportant de plus un arbre d'excentrique (25 ; 65) qui a un axe central (W) excentré par rapport à l'axe central (S) dudit arbre d'entrée (12 ; 72) et qui supporte de manière rotative ladite broche principale (13 ; 62), dans lequel ledit arbre d'excentrique est mis en rotation par ledit mécanisme de pivotement (21, 22, 23, 25, 40 ; 65, 70, 73, 74, 75).

4. Outil selon la revendication 3, dans lequel un contrepoids (30) est agencé d'un seul tenant sur ledit arbre d'excentrique (25) à l'opposé de ladite broche principale (13) par rapport à l'axe de pivotement de ladite broche principale (13).

5. Outil selon la revendication 3 ou 4, dans lequel ledit mécanisme de pivotement (21, 22, 23, 25, 40 ; 65, 70, 73, 74, 75) comporte un premier pignon (22) engrenant avec un pignon (21) intégré audit arbre d'entrée (12), et un second pignon (23) engrenant avec un pignon (40) intégré audit arbre d'excentrique (25), ledit premier pignon (22) engrenant avec ledit second pignon (23), mettant ainsi en rotation ledit arbre d'excentrique (25) dans la direction inverse de celle dudit arbre d'entrée (12), et

ledit mécanisme de mise en rotation (46, 47, 49 ; 76) comporte un pignon planétaire (45) tournant ensemble avec ledit arbre d'excentrique (25), ledit pignon planétaire (45) engrenant avec un pignon (47) intégré audit arbre d'entrée (12) et engrenant aussi avec un pignon (49) intégré à ladite broche principale (13), permettant ainsi que ladite broche principale (13) tourne sur son axe (S) avec un même rapport de vitesse de rotation que celui dudit mécanisme de pivotement, dans la même direction de rotation que celle dudit arbre d'entrée (12).

6. Outil selon la revendication 3 ou 4, dans lequel ledit mécanisme de pivotement comporte un pignon conique monté fou (75), ledit pignon conique monté fou (75) engrenant avec un pignon conique (73) intégré audit arbre d'entrée (72) et engrenant aussi avec un pignon conique (70) intégré audit arbre d'excentrique (65) en mettant ainsi en rotation ledit arbre d'excentrique (65) dans la direction inverse de celle dudit arbre d'entrée (72), et

ledit mécanisme de mise en rotation comporte un pignon planétaire (45) tournant en association avec ledit arbre d'excentrique (25), ledit pignon planétaire (45) engrenant avec un pignon intégré audit arbre d'entrée (12) et engrenant aussi avec un pignon intégré à ladite broche principale (13), permettant ainsi à ladite broche principale (13) de tourner sur son axe avec le même rapport de vitesse de rotation que celui dudit mécanisme de pivotement, dans la même direction de rotation que celle dudit arbre d'entrée (12).

7. Outil selon la revendication 5 ou 6, dans lequel une pluralité d'ensembles constitués dedits premiers pignons (22) et dedits seconds pignons (23) ou une pluralité de pignons coniques montés fous sont espacés de manière égale dans la direction circonférentielle autour de l'axe central dudit arbre d'entrée.

8. Outil selon la revendication 5 ou 6, dans lequel ledit pignon planétaire (45) comporte un mécanisme d'élimination de battement.

9. Outil selon l'une quelconque des revendications 1 à 8, dans lequel ledit outil de coupe (15 ; 61) est supporté sur un porte-outil (14) et ledit porte-outil (14) est fixé sur ladite broche principale (13 ; 62) de manière à être ajustable au niveau angle tournant par rapport à ladite broche principale (13 ; 62).

10. Outil selon l'une quelconque des revendications 1 à 9, dans lequel ledit carter (10, 10a ; 68) contient à la fois ledit mécanisme de pivotement (21, 22, 23, 25, 40 ; 65, 70, 73, 74, 75) et ledit mécanisme de mise en rotation (45, 47, 49 ; 76) à l'exception d'une partie de support d'outil de coupe (14) de ladite broche principale (13) et d'une partie de transmission de force externe dudit arbre d'entrée (12 ; 72).

EP 0 733 434 B1

Fig. 1

12

Fig. 2

Fig. 3

Fig. 4

Fig. 5

Fig. 6

Fig. 7

Fig. 8

Fig. 9